# FASCICULE DE BREVET EUROPEEN

(11) **EP 2 652 387 B1**
(45) Date de publication et mention de la délivrance du brevet: **27.05.2015**
(21) Numéro de dépôt: 11804730.7
(22) Date de dépôt: 06.12.2011
(51) Int. Cl.: F17C 7/04, F17C 9/02, G01N 1/10

(54) **DISPOSITIF DE PRELEVEMENT ET DE VAPORISATION DE GAZ NATUREL LIQUEFIE**
VORRICHTUNG ZUR ENTNAHME UND VERDAMPFUNG VON FLÜSSIGEM ERDGAS
DEVICE FOR SAMPLING AND VAPORIZING LIQUEFIED NATURAL GAS

(30) Priorité: 13.12.2010 FR 1060417
(43) Date de publication de la demande: 23.10.2013
(73) Titulaire: OPTA PERIPH, 95880 Enghien les Bains (FR)
(72) Inventeur: BARERE, Pierre, 95880 Enghien les Bains (FR)
(74) Mandataire: Rhein, Alain
(86) Numéro de dépôt international: PCT/FR2011/052884
(87) Numéro de publication internationale: WO 2012/080619

(56) Documents cités:
- WO-A1-2010/040940
- DE-A1- 10 056 785
- FR-A2- 2 226 616
- US-A- 3 487 692
- US-A1- 2003 017 610
- US-A1- 2009 151 427
- US-A1- 2010 012 201

## Description

La présente invention entre dans le domaine de l'échantillonnage de gaz naturel liquéfié (GNL).

L'invention concerne plus particulièrement un dispositif échantillonnage.

Un tel dispositif trouvera une application toute particulière dans le chargement et déchargement de méthanier, les trains de liquéfaction, les recondenseurs et tout dispositif ou procédé d'échantillonnage représentatif du GNL. Ledit dispositif sera utilisé pour mesurer le pouvoir calorifique supérieur de l'échantillon (par chromatographe ou calorimètre en ligne), son indice de Wobbe, sa composition pour calculer la densité des états liquide et gazeux et pour détecter d'éventuels contaminants. En somme, l'invention permet de prélever un échantillon de gaz pour en vérifier la qualité et calculer l'énergie en ligne lors des transferts transactionnels.

De manière connue, pour son transport, le gaz naturel est condensé à l'état liquide au travers d'un procédé cryogénique moyennant une température de l'ordre de -160 degrés Celsius.

Dans de telles conditions, apparaissent des problèmes d'isolation thermique. Les dispositifs connus possèdent des moyens d'isolation généralement utilisés en cryogénie. Un exemple connu d'isolation consiste à entourer le dispositif d'échantillonnage d'un fourreau de laine de verre sur une épaisseur de plusieurs millimètres, notamment 160 mm pour un facteur K de 18,7 milliwatt par mètre-kelvin. Toutefois, une telle isolation n'apporte pas entière satisfaction.

Afin de l'améliorer, il a aussi été imaginé d'exercer un vide au niveau du fourreau de la sonde de prélèvement. Ainsi, la mise sous vide de ce fourreau de sonde permet une isolation thermique poussée afin de diminuer les risques de fractionnement du gaz. Toutefois, une telle solution ne s'affranchit pas entièrement des pertes par conduction et convexion. De plus, cette technique n'empêche aucunement les pertes par radiation.

Par ailleurs, ce degré d'isolation thermique n'est pas suffisant dans le cadre d'échantillonnage de GNL, de sorte qu'il présente un risque de fractionnement du gaz dans la ligne de prélèvement, notamment en raison d'une absorption d'enthalpie induisant une température de l'échantillon supérieure à la température de sous-refroidissement du GNL. En somme, les dispositifs existants présentent des difficultés pour vaporiser en une liaison complète les molécules de gaz, entrainant une représentativité erronée des échantillonnages réalisés et une erreur aléatoire hors limites, lors des calculs du pouvoir calorifique supérieur et des densités des phases liquide et gazeuse à partir des chromatogrammes obtenus.

En effet, dans les dispositifs existant en sortie de sonde, le gaz prélevé est acheminé au travers d'un serpentin chauffé à l'intérieur et le long duquel il est vaporisé brutalement. Dès lors, il n'est pas possible de contrôler avec exactitude la vaporisation et de limiter les risques de fractionnement.

De plus, un tel serpentin n'assure pas un contrôle du changement de phase liquide vers gazeuse du prélèvement dans des conditions de vaporisation complète. Une phase mixte peut être présente en sortie du serpentin, ne garantissant encore une fois pas une vaporisation complète de l'échantillon et les performances requises par les normes en vigueur, notamment la norme EN 12838 : soit une erreur aléatoire inférieure à 54 16.4561 Kj/Kg pour le pouvoir calorifique supérieur, 18 x 10⁻⁴ Kg/m3 pour la densité de l'échantillon en phase gazeuse et 0.9 Kg/m3 pour la densité de l'échantillon en phase liquide.

Un exemple de dispositif de prélèvement et de vaporisation de Gaz Naturel Liquéfié existant est décrit dans le document US 2009/151427 et comprend une sonde de prélèvement située à une extrémité d'un circuit acheminant le gaz prélevé vers des moyens de mesure au travers d'une chambre de vaporisation. L'échantillon de gaz prélevé est alors directement évaporé à sa pression d'entrée dans la chambre de vaporisation, sans autre transformation d'énergie. Cette vaporisation entraine inévitablement un fractionnement. La présence de ce fractionnement est explicitement démontrée par la présence d'un accumulateur capable de stocker les vapeurs de gaz naturel. Un tel accumulateur vise à mixer les vapeurs de gaz en sortie de vaporisation avec les vapeurs de gaz existantes et déjà stockées. Il s'agit d'une tentative d'homogénéisation pour limiter le fractionnement qui a eut lieu lors de la vaporisation.

Rappelons ici que, lorsqu'un fractionnement se produit, il y a une présence de phases mixtes gaz et liquide. Ces phases vont circuler à des vitesses différentes. En particulier, l'azote et le méthane vont s'évaporer en premier, produisant des poches de gaz dans le courant de la phase liquide. Dès lors, l'évaporation du résidu encore liquide génère une mesure plus importante des autres composants, plus lourds, avec des bulles intermittentes d'azote (N₂) et de méthane (CH₄).

Dès lors, un tel dispositif entraine une irrégularité de la mesure de l'azote, qui est un des principaux contaminants recherché et dont la teneur doit être obtenue avec précision. A l'inverse, le méthane est le principal constituant, dont le taux doit lui aussi être obtenu avec certitude.

L'accumulateur intervient donc pour homogénéiser les phases gazeuses après vaporisation et fractionnement. Toutefois, la différence extrême des masses moléculaires des différents composants limite l'homogénéisation possible pour l'azote et ne peut obtenir un rendement de 100% pour le méthane. Au final, le prélèvement gazeux vaporisé se retrouve inévitablement dissocié, même après le passage dans cet accumulateur.

De plus, un réducteur de flux est prévu, suivi de moyens de détente, mais entraine une diminution progressive de la pression, mais fragilise la phase liquide et provoque le fractionnement. Il n'est alors pas possible d'obtenir une vaporisation exempte de tout fractionnement.

Par ailleurs, le circuit traverse deux vannes d'arrêt et est entouré d'une cloison métallique non calorifugée entourant le coffret antidéflagrant, au sein duquel sont montées les cartouches chauffantes en vue de vaporiser l'échantillon. Un tel agencement génère immanquablement des ponts thermiques en amont de la vaporisation, entraînant une absorption d'enthalpie non contrôlée. Ces pertes thermiques induisent une température de l'échantillon supérieure à la température de sous-refroidissement du GNL, provoquant inexorablement un fractionnement de l'échantillon.

Le document US3487692 décrit un dispositif de vaporisation de gaz naturel liquéfié sans fractionnement.

Le document DE 10056785 divulgue quant à lui la vaporisation de liquides en conditions supercritiques au travers d'un venturi.

La présente invention a pour but de pallier les inconvénients de l'état de la technique en proposant un dispositif de prélèvement et de vaporisation de GNL assurant une vaporisation totale du prélèvement de gaz sous régime supercritique, à savoir à une température de départ constamment inférieure à -130 degrés Celsius (°C) et sous une pression supérieure à 80 bar, selon l'énoncé de la revendication indépendante 1.

Dans ces conditions, l'invention permet de contrôler le changement de phases liquide vers gazeux sans présence de phase mixte induisant un fractionnement.

La transformation de phase sous régime supercritique requiert de maintenir une pression suffisante pour que la vaporisation du gaz s'opère en phase dense sans fractionnement. En particulier, pour une température inférieure à -130°C, la pression est maintenue à au moins 80 bar au moment de la vaporisation.

Ainsi, cette étape de passage du gaz naturel liquéfié depuis sa phase liquide à une phase gazeuse est réalisée au-delà du point critique, ou « circondenbar » (à savoir le point de rosée organique du GNL), de manière à générer un état supercritique du gaz, à savoir qu'il n'y a plus de transition de phase entre l'état liquide et l'état gazeux. Concernant le GNL, ce point critique est atteint pour une température inférieure à -130°C et une pression supérieure à 80 bar.

Pour ce faire, le dispositif selon l'invention prévoit d'utiliser l'augmentation de volume du gaz au moment de sa vaporisation pour conserver une pression supérieure à 80 bar.

Un tel dispositif comprend un circuit équipé à une extrémité des moyens de prélèvement d'un échantillon dudit gaz liquéfié et acheminant ledit échantillon vers des moyens de mesure, ledit circuit comprenant encore et traversant des moyens de vaporisation dudit échantillon prélevé.

Il se caractérise en ce que lesdits moyens de vaporisation se présentent sous la forme d'au moins une chambre de vaporisation comprenant successivement le long dudit circuit une première portion de section convergente et une seconde portion de section divergente conformées de manière à vaporiser l'intégralité dudit échantillon de gaz, en conditions supercritiques sous pression supérieure à 80 bar générée par la vaporisation et sans fractionnement dudit échantillon.

Il se caractérise encore en ce que ladite chambre de vaporisation comprend, en entrée au niveau de ladite section convergente, un orifice à ouverture variable, ledit orifice étant dimensionné de manière à limiter la pression de vaporisation à un maximum de 90 bar en conjonction avec un orifice fixe en sortie de la section divergente.

Les sections convergente et divergente de l'invention ne sont pas assimilables à un réducteur de flux, mais fonctionnent sur le principe d'un venturi. En somme, la réduction de pression n'est pas la conséquence d'une restriction provoquée par un orifice, mais à une transformation de pression (énergie potentielle) en vitesse (énergie cinétique). Selon l'expression de Bernoulli, la pression d'origine régnant dans la chambre tend alors vers la tension de vapeur saturante du GNL à une température de -130 °C, soit 5 atmosphères. L'augmentation de la pression au dessus du seuil requis de 80 bar est ensuite obtenue suite à l'augmentation de volume de l'échantillon lors de la transformation de la phase depuis l'état liquide vers l'état gazeux, cette transformation étant induite par le transfert d'enthalpie (notamment un apport calorifique supérieure à 650 Joules).

Par conséquent, ladite transformation s'effectue sous conditions supercritiques à pression supérieure à 80 bar, permettant une analyse chromatographique de l'échantillon qui est totalement exempt de fractionnement. On notera que l'orifice prévu variable au sens de la présente invention, se distingue en ce qu'il est prévu pour limiter la pression maximum à 90 bar.

Par ailleurs, le dispositif selon l'invention assure un maintien en phase liquide de l'échantillon jusqu'à son point de vaporisation. Pour ce faire, le circuit est intégré au sein d'une jaquette sous vide jusqu'en sortie de la chambre de vaporisation.

A ce titre, selon d'autres caractéristiques additionnelles, lesdits moyens de prélèvement se présentent sous la forme d'au moins une sonde, traversée par ledit circuit, enfermée dans un fourreau et équipée de moyens d'isolation thermique comprenant des moyens de mise sous vide dudit fourreau à une pression inférieure à 100 millibar.

Préférentiellement, lesdits moyens d'isolation comprennent une jaquette sous vide.

En particulier, lesdits moyens d'isolation comprennent un enrobage de ladite sonde, ledit enrobage étant constitué d'un matériau en nanotubes.

Dès lors, le serpentin a uniquement pour rôle de réchauffeur du gaz, qui y est déjà totalement vaporisé en entrée.

Ceci est aussi rendu possible par le fait que l'invention améliore l'isolation thermique de la sonde de prélèvement.

D'une part, le fourreau de sonde est soumis à une dépression sous forme d'un vide poussé, maintenu en dessous de 100 millibar.

D'autre part, cette mise sous vide du fourreau est couplée à une isolation interne de ce fourreau par un matériau structuré en nanotubes.

Dès lors, la pression résiduelle basse minimise les risques d'apparition de pont thermique par conduction et convection, tandis que l'isolant à structure nanotubes restreint les pertes par radiation. Cette combinaison permet d'obtenir une conductivité thermique apparente (facteur K) inférieur à 1 milliwatt par mètre-Kelvin. Par conséquent, il est possible de contrôler une absorption d'enthalpie inférieure au degré de sous-refroidissement et d'éviter tout risque de fractionnement dans au sein du dispositif de prélèvement.

Ainsi, l'invention permet de garantir les performances requises en conformité avec les normes en vigueur, notamment la norme EN 12838 et les restrictions d'erreurs aléatoires susmentionnées.

D'autres caractéristiques et avantages de l'invention ressortiront de la description détaillée qui va suivre des modes de réalisation non limitatifs de l'invention, en référence aux figures annexées dans lesquelles :
- la figure 1 représente un diagramme relatif aux états de transformation du gaz naturel liquéfié, exprimant la température en degré Celcius (°C) selon l'axe des abscisses, en fonction de la pression en bar selon l'axe des ordonnées ;
- la figure 2 est une vue en coupe longitudinale de l'intégralité du dispositif selon l'invention ;
- la figure 3 est une vue en coupe longitudinale d'un détail dudit dispositif visible sur la figure 2, représentant la chambre de vaporisation et le serpentin de chauffage du gaz en sortie de vaporisation ; et
- la figure 4 représente une vue de détail la chambre de vaporisation.

L'invention concerne l'échantillonnage de gaz naturel liquéfié (GNL). En particulier, l'invention vise le prélèvement de GNL depuis une ligne, tel une conduite ou un pipeline, ou bien des moyens de stockage, où ledit gaz se trouve à l'état liquide, pour le vaporiser et effectuer des analyses qualitatives et quantitatives sur ledit échantillon parvenu à l'état gazeux.

En particulier, au sein de son environnement où il sera prélevé, ledit GNL se trouve à une température d'environ -160°C et à une pression de 1,5 à 18 bar.

L'invention vise donc à prélever un échantillon de GNL dans de telles conditions et à le conserver dans des conditions supercritiques lors de sa vaporisation.

Pour ce faire, la présente invention concerne un dispositif 1 de prélèvement et de vaporisation de gaz naturel liquéfié.

Un tel dispositif 1 comprend un circuit, à l'intérieur duquel va circuler ledit échantillon à l'état liquide prélevé, depuis son environnement d'origine, notamment au sein d'une conduite, jusqu'à des moyens de mesure dudit échantillon à l'état gazeux après sa vaporisation.

A ce titre, lesdits moyens de mesure peuvent consister en des appareils à même de mesurer le pouvoir calorifique ou indice de Wobbe de l'échantillon (par exemple un calorimètre, un chromatographe, un spectrophotomètre ou autre type d'analyseur), ainsi que sa densité ou sa composition.

Ledit circuit est constitué d'un premier segment 3 et d'un second segment 30.

Tout d'abord, le premier segment 3 intègre une sonde de prélèvement 4. Cette dernière est constituée d'un capillaire armé 40, d'une bride de fixation 2 dudit capillaire armé 40 sur la conduite où le GNL est prélevé et d'une vanne cryogénique d'isolement 6 de ladite conduite, permettant le démontage du second segment 30, pour une éventuelle opération de maintenance.

Ladite sonde 4, dont l'entrée est dirigée dans le sens du débit dans la conduite, afin d'éviter tout fractionnement par effet vortex de la phase liquide, prélève un débit de gaz liquéfié sous l'effet de la pression régnant au sein de la conduite, notamment de deux litre par heure environ.

En sortie de ce premier segment 3, le capillaire armé 40 est raccordé à un capillaire d'interface 5 d'états liquide gaz, lequel peut être torsadé ou hélicoïdal. De plus, ledit capillaire d'interface 5 est relié à une vanne cryogénique 6. La commande de cette vanne s'opère au moyen d'un dispositif cryogénique constitué d'une tige longue de manoeuvre accessible après démontage de la bride d'extrémité 21.

La fonction de ce capillaire d'interface 5 sera d'éviter l'équipression entre la conduite de gaz naturel liquéfié et la phase gazeuse qui sera générée en aval.

Avantageusement, ladite sonde est équipée de moyens d'isolation thermique. Ces derniers sont prévus à même de maintenir une température au sein dudit circuit inférieure à -130°C.

Pour ce faire, d'une part, lesdits moyens d'isolation peuvent comprendre des moyens de mise en dépression dudit circuit à une pression dite « absolue », préférentiellement inférieure à 100 millibar, notamment au travers d'une pompe à vide électrique ou d'un éjecteur à air. En particulier, les moyens d'isolation se présentent sous la forme d'une gaine ou jaquette 7 hermétique entourant ledit capillaire d'interface 5 et dont l'espace intérieur est mis sous vide poussé.

Dès lors, cette forte dépression permet de limiter une absorption d'enthalpie inférieure au degré de sous-refroidissement et de minimiser les ponts thermiques par conduction et convection.

On notera qu'une vanne 20 à fermeture automatique peut se trouver à l'intérieur de ladite gaine 7 et que ladite vanne 20 est actionnée via le pilote 9 par un dispositif externe, afin d'isoler le coffret vaporiseur, en cas de non fonctionnement.

De plus, selon une autre caractéristique, la paroi interne de la gaine sous vide 7 peut être manchonnée par un enrobage en matériau d'isolement à structure nanotubes.

Un tel matériau à structure nanotubes peut se présenter sous la forme de feuilles isolantes flexibles constituées d'un aérogel nano-poreux. En somme, un aérogel en silice est renforcé par des fibres microscopiques, voire nanoscopiques, assurant une isolation thermique pour des températures comprises entre -200 et -40°C, avec une épaisseur inférieure au centimètre. De plus, un tel matériau isolant est hydrophobe.

A l'aide d'un tel enrobage, les moyens d'isolation permettent de limiter les pertes par radiation à une conductivité thermique apparente (facteur K) inférieure à 1 milliwatt par mètre-Kelvin.

Avec une telle isolation, la température de l'échantillon dans cette partie du circuit peut être maintenue en dessous de -130°C, température favorable pour vaporiser l'échantillon sous conditions supercritiques.

Avantageusement, l'invention prévoit de dépasser le point critique du GNL, de sorte que la transformation du GNL vers l'état gazeux s'opère en phase dense, sans fractionnement.

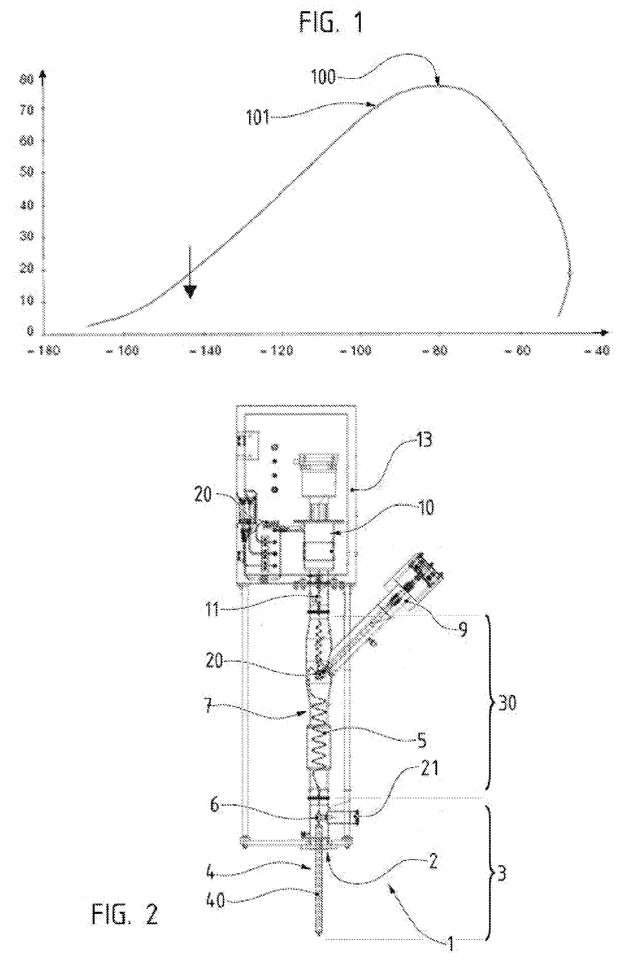

Selon le diagramme visible sur la figure 1, de telles conditions sont réunies au-delà du point de « circondenbar », référencé 100, bien au-delà du point critique, référencé 101. Sous cette courbe de la température en fonction de la pression, le gaz naturel se trouve en phase mixte, liquide et gazeux. A gauche et au-dessus de la courbe, le gaz naturel se trouve à l'état liquide, tandis qu'il se trouve à l'état entièrement gazeux à droite et au dessus de ladite courbe.

Dès lors, au passage du point 100, la transition de liquide à gazeux s'effectue entièrement, sans passage en phase mixte ou fractionnement.

On notera que, selon la figure 1, la flèche indique approximativement sur la courbe le point d'entrée de l'échantillon de GNL dans les moyens de vaporisation, à savoir entre -160 et -130°C.

Pour ce faire, ledit circuit, en particulier ledit capillaire d'interface 5, se prolonge par des moyens de vaporisation dudit échantillon prélevé.

On notera que la température inférieure à -130°C assure une phase 100% liquide en entrée desdits moyens de vaporisation.

De tels moyens de vaporisation se présentent sous la forme d'au moins une chambre de vaporisation 11. Cette dernière a été développée pour contrôler le changement de phase liquide vers gaz du GNL en régime supercritique, afin de garantir une vaporisation complète de l'échantillon.

En sortie de ladite chambre de vaporisation 11, le circuit se prolonge par des moyens de réchauffement 10 de l'échantillon de gaz vaporisé.

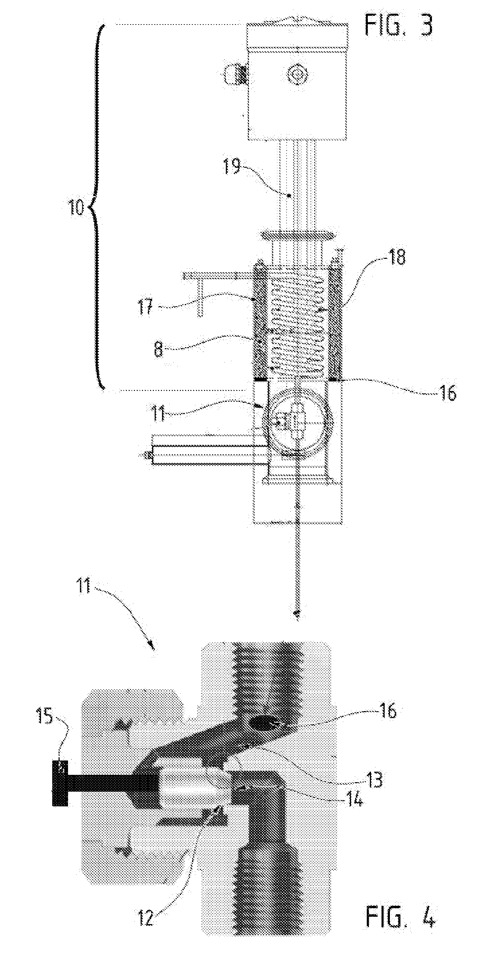

Comme visible sur le mode de réalisation de la figure 3, lesdits moyens de réchauffement 10 comprennent un serpentin chauffant 18, dans la continuité du serpentin 5 visible sur la figure 2. Un tel serpentin 18 peut être constitué d'un tube en matériau métallique, tel de l'acier inoxydable. Il est entouré de moyens de chauffage adaptés, notamment un bouilleur 17 rempli de poudre de cuivre et incorporant des résistances 19 électriques chauffantes.

De tels moyens de réchauffement permettent de maintenir le circuit les traversant et l'échantillon en sortie 20 du réchauffeur de gaz 10 à une température positive de l'ordre de 65°C, pour une température d'échantillon issu de la chambre de vaporisation de l'ordre de -50°C.

De plus, lesdits moyens de réchauffement sont isolés thermiquement et peuvent posséder un échangeur 16 de température ambiante, de manière à permettre un transfert d'enthalpie vers ladite chambre de vaporisation 11 se trouvant en amont pour générer la chaleur latente de vaporisation de l'échantillon.

En somme, cet échangeur 16 procure la plus grande partie de la chaleur latente qui est transférée sous forme d'un flux thermique cheminant le long des parois du bouilleur 17 et du circuit jusqu'à la chambre de vaporisation 11.

En particulier, selon le mode préférentiel de réalisation, un tel échangeur peut être du type échangeur à ailettes et posséder une superficie de l'ordre de 90 cm².

Ainsi, en entrée de la chambre de vaporisation 11, la température de l'échantillon est à -130°C, tandis qu'elle atteint -50°C en sortie de cette chambre après changement de phase et à + 65°C en sortie du réchauffeur de gaz 10 constitué par le bouilleur 17.

A ce titre, ladite chambre de vaporisation 11, dont le détail est représenté sur la figure 4, comprend successivement le long dudit circuit une première portion 12 de section convergente et une seconde portion 13 de section divergente. En somme, au niveau de la chambre de vaporisation, ledit circuit va en se rétrécissant au niveau de la première portion 12 et en s'élargissant au niveau de la seconde portion 13. La chambre de vaporisation s'apparente donc à une sorte de « venturi ».

Plus particulièrement, les première 12 et seconde 13 portions sont conformées de manière à vaporiser l'intégralité dudit échantillon de gaz, en conditions supercritiques et sans fractionnement dudit échantillon.

Comme évoqué précédemment, ladite première portion 12 est soumise en entrée à la température de l'échantillon inférieure à -130°C et, consécutivement à l'enthalpie transférée par ledit échangeur de température 16 et le serpentin 5 en aval, est portée à une température de -50°C correspondant à l'extrémité de l'enveloppe de phase mixte en fig. 1.

Dès lors, les effets conjugués de la détente au niveau de l'orifice à ouverture variable 14, de la transformation de l'énergie potentielle en énergie cinétique de l'échantillon sous l'effet de la convergence lorsqu'il entre dans la première portion 12 et du transfert d'enthalpie provenant des moyens de réchauffement en sortie de la chambre de vaporisation 11, provoquent une vaporisation totale de l'échantillon de gaz.

On notera que, sans ce transfert d'enthalpie, la pression à l'intérieur de la chambre de vaporisation tendrait vers la tension de vapeur saturante du GNL, à savoir environ 5 atmosphères à une température de -130°C. Toutefois, le transfert d'enthalpie se traduit par un apport calorique supérieur à 650 Joules, excédant la valeur requise, soit la chaleur latente, pour provoquer la vaporisation complète de l'échantillon contenu dans la chambre de vaporisation.

Cette transformation de la phase liquide en phase gazeuse produit une augmentation de volume selon le ratio 1:650, augmentant la pression à l'intérieur de la chambre de vaporisation.

Si la sortie de cette dernière était fermée, la pression interne provoquée augmenterait jusqu'à 3250 bar, soit 650 fois la pression saturante. C'est pour cette raison qu'en sortie du cône divergent de la chambre de vaporisation 11 est prévu un orifice fixe 16 dimensionné de manière à limiter la pression à 90 bar dans la chambre de vaporisation en conjonction avec l'orifice variable 14.

On notera alors que la pression dans l'intégralité de la chambre de vaporisation ne descend jamais en dessous de 80 bar lorsque la température de l'échantillon de GNL est en dessous de -130°C, conservant les conditions supercritiques améliorant la vaporisation.

L'invention peut prévoir aussi d'intégrer au niveau de l'entrée de la section convergente 12 de la chambre de vaporisation 11, un orifice 14 à ouverture variable, notamment par ressort ajustable 15, afin de limiter la pression dans le chambre de vaporisation comme indiqué ci-avant et de conjuguer la transformation liquide en gaz due à l'apport calorifique précité avec une détente accentuant la vaporisation du liquide au niveau du convergent.

On notera que cette ouverture est prévue réglable, de manière à gérer la quantité et le débit de GNL passant par ledit orifice 14 à ouverture variable, lequel n'est jamais complètement fermé.

Dès lors, un tel orifice à ouverture variable 14 assure deux fonctions : la limitation de la pression et la détente du gaz en entrée de la section convergente 12, afin d'initier le processus de vaporisation.

Par ailleurs, une vanne à régulation du débit massique du gaz vaporisé est prévu en aval du dispositif 1 : si la température en entrée de la chambre de vaporisation remonte et dépasse le seuil de -130°C, la consigne du régulateur de débit massique pilotant cette vanne, autour d'une valeur moyenne de 1000 Nl/h, est augmentée jusqu'à 1 500 Nl/h.

On notera que cette augmentation de température peut être due à un échantillon anormalement constitué d'éléments plus lourds ou bien à une baisse de la pression de l'environnement initial, par exemple une pression de ligne inférieure à 2 bar.

Cette augmentation du débit est maintenu jusqu'à ce que la température soit revenue en dessous de -130°C.

A ce titre, des moyens spécifiques de mesure de la température sont mis en oeuvre, notamment une sonde de mesure de température à extension cryogénique (afin de ne pas générer d'enthalpie) est montée en amont à proximité immédiate de la chambre de vaporisation afin de mesurer la température critique de -130°C prévue à cet endroit.

Egalement, les températures à l'intérieur et en sortie du réchauffeur de gaz 10, ainsi que la puissance électrique consommée par les résistances électriques de ce même réchauffeur, sont mesurées pour assurer les fonctions de régulation, validation et sécurité de l'ensemble du dispositif.

Des valeurs expérimentales ont été obtenues au cours de la liquéfaction sous Argon liquide d'un échantillon de gaz naturel, puis sa vaporisation.

De ces mesures expérimentales, l'enthalpie absorbée par le GNL en son point de prélèvement jusqu'à la chambre de vaporisation, soit 4462 J/kg), reste bien inférieure au degré de sous refroidissement autorisé, soit au maximum 27000 J/kg.

Bien entendu, l'invention n'est pas limitée aux exemples illustrés et décrits précédemment qui peuvent présenter des variantes et modifications sans pour autant sortir du cadre de l'invention.

## Revendications

1. Dispositif (1) de prélèvement et de vaporisation de gaz naturel liquéfié, comprenant un circuit équipé à une extrémité de moyens de prélèvement (4) d'un échantillon dudit gaz liquéfié et acheminant ledit échantillon vers des moyens de mesure, ledit circuit comprenant encore et traversant des moyens de vaporisation dudit échantillon prélevé se présentant sous la forme d'au moins une chambre de vaporisation (11), en sortie de laquelle le circuit se prolonge par des moyens de réchauffement (10) de l'échantillon de gaz vaporisé, ledit dispositif (1) étant **caractérisé en ce que** ladite chambre de vaporisation (11) comprend successivement le long dudit circuit une première portion de section convergente (12) et une seconde portion de section divergente (13) conformées de manière à vaporiser l'intégralité dudit échantillon de gaz, en conditions supercritiques sous pression supérieure à 80 bar générée par la vaporisation et sans fractionnement dudit échantillon, et **en ce que** ladite chambre de vaporisation (11) comprend, en entrée au niveau de ladite section convergente (12), un orifice (14) à ouverture variable, ledit orifice (14) étant dimensionné de manière à limiter la pression de vaporisation à un maximum de 90 bar dans la chambre de vaporisation (11) en conjonction avec un orifice fixe en sortie de la section divergente (13).

2. Dispositif (1) selon la revendication 1, **caractérisé en ce que** lesdits moyens de prélèvement (4) se présentent sous la forme d'au moins une sonde, traversée par ledit circuit, enfermée dans un fourreau et équipée de moyens d'isolation thermique comprenant des moyens de mise sous vide dudit fourreau à une pression inférieure à 100 millibar.

3. Dispositif (1) selon la revendication 2, **caractérisé en ce que** lesdits moyens d'isolation comprennent une jaquette sous vide (7).

4. Dispositif (1) selon l'une des revendications 2 ou 3, **caractérisé par le fait que** lesdits moyens d'isolation comprennent un enrobage de ladite sonde, ledit enrobage étant constitué d'un matériau en nanotubes.

## Patentansprüche

1. Vorrichtung (1) zum Entnehmen und Verdampfen von verflüssigtem Erdgas, umfassend einen Kreislauf, der an einem Ende mit Mitteln zum Entnehmen (4) einer Probe des besagten verflüssigten Gases und zum Fördern der besagten Probe zu Meßmitteln versehen ist, wobei der Kreislauf ebenfalls Mittel zum Verdampfen der besagten entnommenen Probe umfasst - und durch diese letzteren hindurch läuft -, die als mindestens eine Verdampfungskammer (11) ausgestaltet sind, an deren Auslass der Kreislauf mit Mitteln zum Erwärmen (10) der verdampften Gasprobe verlängert ist, wobei die besagte Vorrichtung (1) **dadurch gekennzeichnet ist, dass** die besagte Verdampfungskammer (11) aufeinanderfolgend entlang des besagten Kreislaufes einen ersten Teil eines konvergierenden Abschnitts (12) und einen zweiten Teil eines divergierenden Abschnitts (13) umfasst, die so geformt sind, dass sie die besagte Gasprobe unter überkritischen Bedingungen bei einem durch die Verdampfung erzeugten Druck größer als 80 Bar und ohne Fraktionierung der besagten Gasprobe völlig verdampfen, und dass die besagte Verdampfungskammer (11) am Einlass eines konvergierenden Abschnitts (12) eine Öffnung (14) mit variierbarer Öffnung umfasst, wobei die besagte Öffnung (14) so dimensioniert ist, dass sie den Verdampfungsdruck auf maximal 90 Bar in der Verdampfungskammer (11) in Verbindung mit einer festen Öffnung am Auslass im Bereich des divergierenden Abschnitts begrenzen (13).

2. Vorrichtung (1) nach Anspruch 1, **dadurch gekennzeichnet, dass** die Entnahmemittel (4) als mindestens eine Sonde ausgestaltet sind, durch die der Kreislauf läuft, und die in einer Hülle eingeschlossen ist und mit Wärmeisolierungsmitteln versehen ist, die Mittel umfassen, um die besagte Hülse bei einem Druck niedriger als 100 mBar unter Vakuum zu setzen.

3. Vorrichtung (1) nach Anspruch 2, **dadurch gekennzeichnet, dass** die Isolationsmittel einen unter Vakuum stehenden Mantel (7) umfassen.

4. Vorrichtung (1) nach einem der Ansprüche 2 oder 3, **dadurch gekennzeichnet, dass** die Isolationsmittel eine Umhüllung der besagten Sonde umfasst, wobei die Umhüllung aus einem Nanoröhrchenmaterial besteht.

## Claims

1. Device (1) for collecting and vaporizing liquefied natural gas, comprising a circuit provided at one end with means (4) for collecting a sample of said liquefied gas and conveying said sample to measuring means, said circuit also comprising and passing through means for vaporizing said collected sample being in the form of at least one vaporization chamber (11) at the outlet of which the circuit is extended by means for heating (10) the vaporized gas sample, said device (1) being **characterized in that** said vaporization chamber (11) comprises successively along said circuit a first portion of a converging segment (12) and a second portion of a diverging segment (13) shaped so as to vaporize the entirety of said gas sample under supercritical conditions under a pressure higher than 80 bar generated by the vaporization and without fractioning of said sample, and **in that** said vaporizing chamber (11) comprises, at the inlet at the level of said converging segment (12), an orifice (14) with varying opening, said orifice (14) being dimensioned so as to limit the vaporizing pressure to a maximum of 90 bar in the vaporization chamber (11) in conjunction with a fixed orifice at the outlet of the diverging segment (13).

2. Device (1) according to claim 1, wherein said collecting means (4) are in the form of at least one probe, through which said circuit passes, enclosed in a sheath and provided with heat-insulation means comprising means for putting said sleeve under vacuum at a pressure lower than 100 millibar.

3. Device (1) according to claim 2, wherein said insulation means comprise a jacket (7) under vacuum.

4. Device (1) according to one of claims 2 or 3, wherein said isolation means comprise a coating of said probe, said coating consisting of a nanotube material.
